# EUROPÄISCHE PATENTSCHRIFT

(11) **EP 2 550 188 B1**
(45) Veröffentlichungstag und Bekanntmachung des Hinweises auf die Patenterteilung: **31.05.2017**
(21) Anmeldenummer: 11710756.5
(22) Anmeldetag: 23.03.2011
(51) Int. Cl.: B60T 8/1764

(54) **VERFAHREN ZUM BETREIBEN EINER BREMSEINRICHTUNG EINES FAHRZEUGS MIT AN EINER ACHSE ABHÄNGIG VON EINEM LENKEINGRIFF ANGEPASSTER BREMSDRUCKDIFFERENZ**
METHOD FOR OPERATING A BRAKE DEVICE OF A VEHICLE WITH A BRAKE PRESSURE DIFFERENCE ON AN AXLE ADAPTED AS A FUNCTION OF A STEER INPUT
PROCÉDÉ POUR FAIRE FONCTIONNER UN DISPOSITIF DE FREINAGE D'UN VÉHICULE AVEC UNE DIFFÉRENCE DE PRESSION DE FREINAGE ADAPTÉE À UN ESSIEU EN FONCTION D'UNE INTERVENTION DE BRAQUAGE

(30) Priorität: 24.03.2010 DE 102010012497
(43) Veröffentlichungstag der Anmeldung: 30.01.2013
(73) Patentinhaber: KNORR-BREMSE Systeme für Nutzfahrzeuge GmbH, 80809 München (DE)
(72) Erfinder: HECKER, Falk, 71706 Markgröningen (DE); SCHMIDT, Marco, 70197 Stuttgart (DE)
(74) Vertreter: Schönmann, Kurt
(86) Internationale Anmeldenummer: PCT/EP2011/054414
(87) Internationale Veröffentlichungsnummer: WO 2011/117279

(56) Entgegenhaltungen:
- EP-A2- 1 522 484
- WO-A1-2004/005093

## Beschreibung

Die Erfindung betrifft ein Verfahren zum Betreiben einer Bremseinrichtung eines Fahrzeugs mit Antiblockierregelsystem auf Fahrbahnen mit seitenweise unterschiedlichen Reibwerten, aufgrund derer beim Bremsen ein Brems-Giermoment auf das Fahrzeug ausgeübt wird, gemäß dem Oberbegriff von Anspruch 1 sowie eine Vorrichtung zur Ausführung des Verfahrens nach Anspruch 7.

Um zu vermeiden, dass die Räder des Kraftfahrzeugs beim Betätigen der Bremse infolge eines vom Fahrzeuglenker aufgebrachten zu hohen Bremsdrucks blockieren und das Kraftfahrzeug dadurch seine Stabilität oder seine Lenkfähigkeit verliert, sind Fahrzeugbremsanlagen üblicherweise mit einer Bremsschlupfregelung (ABS) ausgestattet, wobei der Bremsschlupf auf einen optimalen Bremsschlupf eingeregelt wird.

Bei einer Bremsschlupfregelung wird bei erkannter Blockiergefährdung eines oder mehrerer Fahrzeugräder jeweils zumindest in einem Teil der druckmittelbetätigten Bremsanlage der Bremsdruck unabhängig von der durch den Fahrzeuglenker aufgebrachten Bremspedalkraft selbsttätig so lange moduliert, d. h. so lange abgesenkt, konstant gehalten und wieder angehoben, bis keine Blockiergefährdung mehr vorliegt. Bremsschlupf-Regeleinrichtungen für Kraftfahrzeug-Bremsanlagen haben also ganz allgemein die Aufgabe, insbesondere bei glatter Fahrbahn und bei voller Betätigung der Betriebsbremsanlage die Richtungsstabilität sowie die Lenkfähigkeit des Fahrzeugs bei möglichst kurzen Anhalte- bzw. Bremswegen sicherzustellen.

Auf Fahrbahnen mit merklich unterschiedlich großen Reibwerten rechts/links (µ-split) kann es aber infolge der dann sehr unterschiedlich großen wirksamen Bremskräfte an den rechten und an den linken Fahrzeugrädern zu einer Verringerung der Richtungs- bzw. Fahrstabilität des Fahrzeugs kommen. Diese starke Asymmetrie bzw. Unausgeglichenheit der wirksamen Bremskräfte an der rechten und an der linken Fahrzeugseite erzeugt in Abhängigkeit von diesen asymmetrischen Kräften ein das Fahrzeug um seine Hochachse drehendes mehr oder weniger großes Brems-Giermoment. Um dem entgegenzuwirken und die Richtungs- bzw. Fahrstabilität zu bewahren, d.h. das Fahrzeug auf Kurs zu halten, kann der Fahrzeuglenker das Lenkrad korrigierend betätigen, um ein in Bezug zu dem Brems-Giermoment entgegen wirkendes Giermoment zu erzeugen.

Bei blockiergeschützten Fahrzeug-Bremsanlagen besteht in solchen Situationen also generell ein Zielkonflikt. Einerseits wird angestrebt, beim Bremsen möglichst kurze Brems- bzw. Anhaltewege zu erzielen, andererseits ist es aber auch wichtig, beim Bremsen die Richtungs- bzw. Fahrstabilität sowie die Lenkfähigkeit des Fahrzeuges aufrechtzuerhalten.

Dabei räumen Hersteller von bremsschlupfgeregelten Kraftfahrzeug-Bremsanlagen der Aufrechterhaltung von Richtungs- bzw. Fahrstabilität sowie der Lenkfähigkeit des Fahrzeugs in der Regel eine höhere Priorität ein als der Erzielung möglichst kurzer Bremswege.

Um die Richtungs- und Fahrstabilität des Fahrzeugs zu erhalten, wird die ABS-Regelstrategie in solchen Fahrsituationen angepasst. Dabei werden zumindest die Räder einer Achse beispielsweise nach dem so genannten select-low-Prinzip blockiergeregelt, d. h. in Abhängigkeit vom jeweils gerade mit dem niedrigsten Reibwert betriebenen Fahrzeugrad. Das bedeutet, dass in der oben beschriebenen Betriebssituation die Bremse des auf dem höheren Reibwert umlaufenden Rades nur mit demselben vergleichsweise niedrigen Bremsdruck beaufschlagt wird, wie die Bremse des auf dem niedrigeren Reibwert umlaufenden anderen Rades, obgleich es wegen des an ihm vorherrschenden höheren Reibwertes auch ohne zu blockieren stärker abgebremst werden könnte. An beiden Rädern werden hierbei also gleich große bzw. gleich kleine Bremskräfte aufgebracht, so dass diese nichts zur Erzeugung eines Brems-Giermomentes beitragen. Da das auf dem höheren Reibwert umlaufende Rad weniger stark als möglich abgebremst wird, besitzt dieses ein entsprechend hohes Potential zur Führung von Seitenkräften, was der Richtungs- bzw. Fahrstabilität des Fahrzeugs zugute kommt. Erkauft wird die gute Richtungs- und Fahrstabilität jedoch mit längeren Bremswegen, da die auf höheren Reibwerten umlaufenden Fahrzeugräder bei diesem Regelungsprinzip weniger stark abgebremst werden als der dort herrschende Kraftschluss es an sich zulassen würde.

Soweit bei einer blockiergeschützten hydraulischen Fahrzeug-Bremsanlage mit nach dem select low-Prinzip blockiergeschützten Hinterrädern die beiden Vorderradbremsen individuell durch jeweils eigene Einrichtungen blockiergeschützt sind, ist es üblich, die Wirkung eines sich gegebenenfalls infolge unterschiedlich großer Bremskräfte am rechten und am linken Vorderrad aufbauenden Giermoments durch eine der individuellen Blockierschutzregelung der beiden Vorderräder überlagerte so genannte Giermomentenbeeinflussung abzuschwächen. Durch die überlagerte Giermomentenbeeinflussung wird dafür gesorgt, dass der Bremsdruck am auf dem höheren Reibwert umlaufenden Vorderrad langsamer aufgebaut wird als an sich möglich, um dem Fahrzeuglenker durch das daraus resultierende verzögerte Aufbauen des Giermoments zusätzliche Zeit zum Reagieren zu geben, d.h. zum Gegenlenken. Auch die überlagerte Giermomentenbeeinflussung trägt zu einer Verschlechterung des erreichbaren Brems- bzw. Anhaltewegs bei.

Gemäß DE 602 17 834 T2 ist ein elektrisch unterstütztes Lenksystem vorhanden, das während eines bremsschlupfgeregelten µ-split-Bremsvorgangs eingreift, um das Fahrzeug mittels automatischer Lenkeingriffe stabil zu halten. Durch diese Stabilisierungsmaßnahmen könne das ABS-Verhalten aggressiver gestaltet werden, indem der Bremsdruck an dem Rad mit dem höheren Reibwert schneller, d.h. mit größerer Geschwindigkeit erhöht wird, bis der Schlupfsschwellwert erreicht ist.

Nach der gattungsgemäßen WO 2004/005093 A1 wird während eines bremsschlupfgeregelten µ-split-Bremsvorgangs das select-low-Verfahren an einer Hinterachse dahingehend modifiziert, dass eine Bremsdruckdifferenz zwischen rechtem und linkem Rad abhängig vom Lenkwinkel, der Fahrzeuggeschwindigkeit und von Fahrzustandsgrößen zugelassen wird. Zusätzlich finden überlagerte Lenkeingriffe eines aktiven Lenksystems statt. Es wird aber nicht ausgeführt, auf welche Weise die Lenkeingriffe durch das aktive Lenksystem und die Anpassung der Bremsdruckdifferenz zusammen wirken.

In der ebenfalls gattungsgemäßen EP 1 522 484 A2 findet während eines bremsschlupfgeregelten µ-split-Bremsvorgangs ein Lenkeingriff eines aktiven Lenksystems statt, wobei während einer Anfangsphase des Lenkeingriffs ein Bremsdruckdifferenzsteuerverhältnis auf einen hohen Wert und nach Ablauf einer gewissen Zeitspanne auf einen geringen Wert gesetzt wird. Die Bremsdruckdifferenz wird daher während des Lenkeingriffs zeitabhängig gesteuert.

Der Erfindung liegt die Aufgabe zugrunde, ein Verfahren der eingangs erwähnten Art derart fortzubilden, dass während eines bremsschlupfgeregelten µ-split-Bremsvorgangs eine alternative Strategie zur Verfügung gestellt wird, durch welche einerseits eine möglichst hohe Bremswirkung andererseits aber auch eine größtmögliche Fahrstabilität erreicht wird.

Diese Aufgabe wird erfindungsgemäß durch die Merkmale von Anspruch 1 gelöst.

### Offenbarung der Erfindung

Die Erfindung basiert darauf, dass an wenigstens einer Achse des Fahrzeugs eine absolute Bremsdruckdifferenz zwischen dem Bremsdruck an dem Rad mit dem höheren Reibwert und dem Bremsdruck an dem Rad mit dem niedrigeren Reibwert abhängig von einem auf eine Erzeugung eines in Bezug auf das Brems-Giermoments entgegengesetzt wirkenden Giermoments gerichteten Lenkeingriff des Fahrers und/oder eines automatisch eingreifenden Hilfslenksystems angepasst wird.

Gemäß der Erfindung wird eine umso größere Bremsdruckdifferenz zugelassen, umso größer das durch den Lenkeingriff erzeugte Gegen-Giermoment bzw. die daraus resultierende Ist-Gierrate ist und eine umso geringere Bremsdruckdifferenz, umso geringer das durch den Lenkeingriff erzeugte Gegen-Giermoment bzw. die daraus resultierende Ist-Gierrate ist.

Mit anderen Worten wird die zulässige Bremsdruckdifferenz an der Achse bevorzugt kontinuierlich oder stufenlos an den Lenkeingriff des Fahrers bzw. des Hilfslenksystems als Antwort auf das während des µ-split-Bremsvorgangs erzeugten Brems-Giermoments angepasst. Je mehr also der Fahrer oder das Hilfslenksystem durch einen Lenkeingriff dem Brems-Giermoment entgegenwirken, eine umso größere Bremsdruckdifferenz zwischen den seitenverschiedenen Rädern kann die ABS-Steuerung zulassen. Eine größere absolute Bremsdruckdifferenz bedeutet dann beispielsweise, dass das Rad auf der Seite des höheren Reibwerts mit einer größeren Bremskraft gebremst wird, was letztlich zu einer höheren Gesamtbremswirkung führt.

Demgegenüber wird beim Stand der Technik, beispielsweise gemäß DE 602 17 834 T2 mit durch einen Lenkeingriff des Hilfslenksystems größer werdender Stabilität lediglich der Bremsdruckgradient verändert, d.h. es wird ein schnellerer Bremsdruckaufbau an dem Rad mit dem höheren Reibwert zugelassen, ohne dass aber der absolute Wert der Bremsdruckdifferenz zwischen dem Rad auf der Seite mit dem höheren Reibwert und dem Rad auf der Seite mit dem niedrigeren Reibwert verändert wird.

Insgesamt können daher mit der Erfindung größere Bremskräfte bei Bremsungen unter µ-split-Bedingungen erzeugt werden, falls der Fahrer und/oder ein Hilfslenksystem stabilisierend eingreifen.

Der stabilisierende Lenkeingriff erfolgt dabei durch den Fahrer oder durch ein Hilfslenksystem automatisch. Das Hilfslenksystem kann den Fahrer unterstützen, indem es eine Lenkempfehlung beispielsweise durch ein für den Fahrer am Lenkrad spürbares Lenkmoment vorgibt. Die Information über das Vorliegen eines Brems-Giermoments bei einer Bremsung unter µ-split-Bedingungen erhält das Steuergerät des Hilfslenksystems beispielsweise von einem Gierratensensor. Ein Lenkeingriff des Fahrers kann beispielsweise von einem Lenkwinkelsensor detektiert werden. Beide Variablen - Lenkwinkel und Gierrate - erlauben daher bei einer Bremsung unter µ-split-Bedingungen einen Rückschluss auf das gerade vorliegende Maß an Stabilität des Fahrzeugs (Gierrate) und auf den erfolgten Eingriff durch den Fahrer oder das Hilfslenksystem (Lenkwinkel). Dabei beeinflussen sich beide Variablen gegenseitig. So kann führt ein "richtiger" Lenkeingriff als Reaktion auf das Brems-Giermoment zu einer Verringerung der Ist-Gierrate des Fahrzeugs. Im anderen Fall erfordert eine große Ist-Gierrate als Folge eines hohen Brems-Giermoments einen größeren Lenkeingriff. Auch können natürlich "falsche" Lenkeingriffe als Reaktion auf das Brems-Giermoment zu einer Vergrößerung der Ist-Gierrate führen.

Durch die in den Unteransprüchen aufgeführten Maßnahmen sind vorteilhafte Weiterbildungen und Verbesserungen der in Anspruch 1 angegebenen Erfindung möglich.

Besonders bevorzugt wird die Ist-Gierrate des Fahrzeugs abhängig vom Lenkeingriff des Fahrers oder des Hilfslenksystems durch Veränderung der Bremsdruckdifferenz oder des Bremsdruckdifferenzwerts auf eine Soll-Gierrate im Sinne einer Regelung eingeregelt. In diesem Fall stellen die Gierrate eine Regelgröße, der Lenkeingriff eine Störgröße und die Bremsdruckdifferenz eine Stellgröße des Regelsystems dar. Mit dieser Regelung wird die Stabilität des Fahrzeugs in den Vordergrund gestellt und die Bremsdruckdifferenz an der Achse im Sinne einer Minimierung der Regeldifferenz laufend bzw. kontinuierlich angepasst.

Zur Durchführung des Verfahrens wird eine Vorrichtung vorgeschlagen, welche je Rad der Achse wenigstens einen elektrisch direkt oder indirekt steuerbaren und druckmittelbetätigten Bremsaktuator, je Bremsaktuator wenigstens einen Bremsdrucksensor zur Erzeugung von vom im jeweiligen Bremsaktuator wirkenden Bremsdruck abhängiger Sensorsignale, wenigstens einen Lenkwinkelsensor zur Erzeugung von vom Lenkeingriff abhängiger Sensorsignale, wenigstens einen Gierratensensor zur Erzeugung von von der Gierrate des Fahrzeugs oder von auf das Fahrzeug wirkenden Giermomenten abhängiger Sensorsignale und wenigstens ein elektronisches Steuergerät beinhaltet, welches abhängig von den vom Lenkwinkelsensor, vom Gierratensensor und von den Bremsdrucksensoren erzeugten Sensorsignale die Bremsdruckdifferenz oder den Bremsdruckdifferenzwert zwischen dem Bremsdruck an dem Rad mit dem höheren Reibwert und dem Bremsdruck an dem Rad mit dem niedrigeren Reibwert anpasst. Diese Bauelemente sind im Rahmen von Fahrdynamikregelsystemen (ESP) ohnehin vorhanden, so dass für die Vorrichtung kein zusätzlicher Bauaufwand notwendig ist.

Erfindungsgemäß erfolgt die Anpassung die Bremsdruckdifferenz durch das elektronische Steuergerät dann derart, dass eine umso größere Bremsdruckdifferenz zugelassen wird, umso größer das durch den Lenkeingriff erzeugte Gegen-Giermoment ist und dass eine umso geringere Bremsdruckdifferenz zugelassen wird, umso geringer das durch den Lenkeingriff erzeugte Gegen-Giermoment ist.

Bevorzugt ist auch ein vom Steuergerät derart gesteuertes Hilfslenksystem vorgesehen, dass am Lenkrad ein in Bezug auf das Brems-Giermoment entgegengesetzt wirkendes Giermoment erzeugt wird, durch welches die Differenz zwischen der Ist-Gierrate und der Soll-Gierrate ausgeregelt wird.

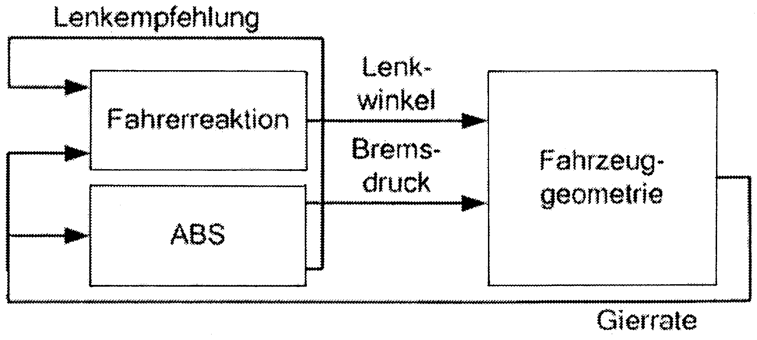

Weitere die Erfindung verbessernde Maßnahmen werden nachstehend gemeinsam mit der Beschreibung eines Ausführungsbeispiels der Erfindung anhand der Zeichnung näher dargestellt.

### Zeichnung

In der Zeichnung zeigt die einzige Figur ein Blockdiagramm, welches das Verfahren gemäß einer bevorzugten Ausführungsform der Erfindung erläutert.

### Beschreibung des Ausführungsbeispiels

Das Blockschaltbild der Figur veranschaulicht ein bevorzugtes Ausführungsbeispiel eines Verfahren zum Betreiben einer beispielsweise elektropneumatischen Bremseinrichtung oder eines Elektronischen Bremssystems (EBS) eines Nutzfahrzeugs mit Antiblockierregelsystem (ABS) auf Fahrbahnen mit seitenweise unterschiedlichen Reibwerten. Aufgrund der seitenweise unterschiedlichen Reibwerte wird beim Bremsen ein Brems-Giermoment auf das Fahrzeug erzeugt, welches in einem von einem Gierratensensor messbaren Ist-Gierrate "Gierrate" resultiert.

Bevorzugt an einer Vorderachse des Nutzfahrzeugs wird eine absolute Bremsdruckdifferenz oder ein absoluter Bremsdruckdifferenzwert zwischen dem Bremsdruckwert an dem Rad der Seite der Achse mit dem höheren Reibwert und dem Bremsdruckwert an dem Rad der Seite der Achse mit dem niedrigeren Reibwert abhängig von einem auf eine Erzeugung eines in Bezug auf das Brems-Giermoments entgegengesetzt wirkenden Giermoments gerichteten Lenkeingriff des Fahrers und eines automatisch eingreifenden Hilfslenksystems angepasst.

Besonders bevorzugt wird die Ist-Gierrate "Gierrate" des Fahrzeugs abhängig vom Lenkeingriff des Fahrers und des Hilfslenksystems durch Veränderung des Bremsdruckdifferenzwerts auf eine Soll-Gierrate im Sinne einer Regelung eingeregelt. Die Gierrate stellt dabei die Regelgröße, der Lenkeingriff eine Störgröße und die Bremsdruckdifferenz eine Stellgröße des Regelsystems dar. Der Block "Fahrzeuggeometrie" in der Figur versinnbildlicht die Regelstrecke.

Zur Realisierung der Regelung ist je Rad der Vorderachse ein elektrisch direkt oder indirekt steuerbaren und druckmittelbetätigter Bremsaktuator, je Bremsaktuator ein Bremsdrucksensor zur Erzeugung von vom im jeweiligen Bremsaktuator wirkenden Bremsdruck abhängiger Sensorsignale, ein Lenkwinkelsensor zur Erzeugung von vom Lenkeingriff abhängiger Sensorsignale, ein Gierratensensor zur Erzeugung von von der Gierrate des Fahrzeugs oder von auf das Fahrzeug wirkenden Giermomenten abhängiger Sensorsignale ein ABS-Steuergerät vorhanden, welches in der Figur mit "ABS" bezeichnet ist und den Regler darstellt.

Das ABS-Steuergerät "ABS" passt abhängig von den vom Lenkwinkelsensor, vom Gierratensensor und von den Bremsdrucksensoren erzeugten Sensorsignale die Bremsdruckdifferenz "Bremsdruck" zwischen dem Bremsdruck an dem Rad mit dem höheren Reibwert und dem Bremsdruck an dem Rad mit dem niedrigeren Reibwert an.

Bevorzugt ist auch ein vom ABS-Steuergerät "ABS" gesteuertes Hilfslenksystem vorhanden, welches am Lenkrad ein in Bezug auf das Brems-Giermoment entgegengesetzt wirkendes Giermoment zur Kompensation erzeugt, das in der Figur auch als "Lenkempfehlung" bezeichnet wird. Durch diese "Lenkempfehlung" soll die Differenz zwischen der Ist-Gierrate ("Gierrate") und der Soll-Gierrate ausgeregelt werden. Weiterhin kann zusätzlich auch der Fahrer stabilisierende Lenkeingriffe vornehmen, was in der Figur durch die "Fahrerreaktion" bezeichnet ist.

Bei einer Bremsung unter µ-split-Bedingungen entsteht folglich ein Brems-Giermoment, welches über den Gierratensensor detektiert und durch ein entsprechendes Signal "Gierrate" an das ABS-Steuergerät "ABS" gemeldet wird. Dieses vergleicht die Ist-Gierrate "Gierrate" mit einer Soll-Gierrate, welche bei Geradeausfahrt beispielsweise gleich Null ist. Gleichzeitig steuert das ABS-Steuergerät "ABS" das Hilfslenksystem, um ein entgegen gerichtetes Giermoment zur Kompensation des Brems-Giermoments zu erzeugen. Dieses Giermoment wird auch am Lenkrad vom Fahrer fühlbar, welcher das vom Hilfslenksystem vorgegebene Giermoment ohne Eingreifen unverändert lassen oder dieses eingreifend verändern kann ("Fahrerreaktion"). Der Block "Fahrzeug" oder "Fahrzeuggeometrie" erhält dann einen durch Lenkeingriff des Fahrers und/oder des Hilfslenksystems ("Lenkempfehlung") vorgegebenen "Lenkwinkel" und einen "Bremsdruck" (Bremsdruckdifferenz) als Eingabegrößen, welche entlang der Regelstrecke "Fahrzeuggeometrie" zu einer bestimmten Ist-Gierrate "Gierrate" führen.

So führt ein "richtiger" Lenkeingriff als Reaktion auf das Brems-Giermoment zu einer Verringerung der Ist-Gierrate "Gierrate" des Fahrzeugs. Gleichzeitig wird mit geringerer Gierrate die zulässige Bremsdruckdifferenz "Bremsdruck" erhöht, um mit der einhergehenden größeren Fahrstabilität auch eine größere Bremsleistung übertragen zu können.

Dabei ist jedoch klar, dass eine große Ist-Gierrate als Folge eines großen Brems-Giermoments einen größeren kompensierenden Lenkeingriff bzw. Lenkwinkel erfordert.

Im anderen Fall, wenn also ein "falscher" Lenkeingriff bei Vorliegen eines Brems-Giermoments erfolgt, beispielsweise indem der Fahrer die "Lenkempfehlung" des Hilfslenksystems durch einen manuellen Lenkeingriff überschreibt, so würde sich die Ist-Gierrate "Gierrate" unerwünscht vergrößern, so dass die Fahrstabilität weiter reduziert wird. In dem Maße wie sich die Instabilität durch ein Ansteigen der Ist-Gierrate "Gierrate" vergrößert wird jedoch der zulässige Bremsdruckdifferenzwert Bremsdruck" reduziert, um durch eine verringerte Asymmetrie der Bremskräfte die Instabilität nicht noch weiter zu vergrößern bzw. das Brems-Giermoment zu reduzieren.

Gemäß einer weiteren Ausführungsform ist kein Hilfslenksystem vorhanden. Dann obliegt es alleine dem Fahrer, durch seine Lenkeingriffe das Brems-Giermoment zu kompensieren.

## Patentansprüche

1. Verfahren zum Betreiben einer Bremseinrichtung eines Fahrzeugs mit Bremsschlupfregelung (ABS) auf Fahrbahnen mit seitenweise unterschiedlichen Reibwerten, aufgrund derer beim Bremsen ein Brems-Giermoment auf das Fahrzeug ausgeübt wird, wobei an wenigstens einer Achse des Fahrzeugs eine absolute Bremsdruckdifferenz zwischen dem Bremsdruck an dem Rad mit dem höheren Reibwert und dem Bremsdruck an dem Rad mit dem niedrigeren Reibwert abhängig von einem auf eine Erzeugung eines in Bezug auf das Brems-Giermoment entgegengesetzt wirkenden Giermoments gerichteten Lenkeingriff des Fahrers und/oder eines automatisch eingreifenden Hilfslenksystems angepasst wird, **dadurch gekennzeichnet, dass** eine umso größere Bremsdruckdifferenz zugelassen wird, umso größer das durch den Lenkeingriff erzeugte Gegen-Giermoment ist und dass eine umso geringere Bremsdruckdifferenz zugelassen wird, umso geringer das durch den Lenkeingriff erzeugte Gegen-Giermoment ist.

2. Verfahren nach Anspruch 1, **dadurch gekennzeichnet, dass** die Anpassung der Bremsdruckdifferenz ausschließlich abhängig vom Lenkeingriff des Fahrers durchgeführt wird.

3. Verfahren nach einem der vorhergehenden Ansprüche, **dadurch gekennzeichnet, dass** die Anpassung der Bremsdruckdifferenz abhängig vom Lenkeingriff kontinuierlich durchgeführt wird.

4. Verfahren nach einem der vorhergehenden Ansprüche, **dadurch gekennzeichnet, dass** es an einer Bremseinrichtung einer Vorderachse angewandt wird.

5. Verfahren nach einem der vorhergehenden Ansprüche, **dadurch gekennzeichnet, dass** die Ist-Gierrate des Fahrzeugs abhängig vom Lenkeingriff durch Veränderung der Bremsdruckdifferenz auf eine Soll-Gierrate eingeregelt wird.

6. Verfahren nach Anspruch 6, **dadurch gekennzeichnet, dass** die Soll-Gierrate im Wesentlichen gleich Null ist.

7. Vorrichtung zur Ausführung des Verfahrens nach einem der vorhergehenden Ansprüche, beinhaltend
a) je Rad der Achse wenigstens einen elektrisch direkt oder indirekt steuerbaren und druckmittelbetätigten Bremsaktuator,
b) je Bremsaktuator wenigstens einen Bremsdrucksensor zur Erzeugung von vom im jeweiligen Bremsaktuator wirkenden Bremsdruck abhängiger Sensorsignale,
c) wenigstens einen Lenkwinkelsensor zur Erzeugung von vom Lenkeingriff abhängiger Sensorsignale,
d) wenigstens einen Gierratensensor zur Erzeugung von von der Gierrate des Fahrzeugs oder von auf das Fahrzeug wirkenden Giermomenten abhängiger Sensorsignale,
e) ein elektronisches Steuergerät, welches abhängig von den vom Lenkwinkelsensor, vom Gierratensensor und von den Bremsdrucksensoren erzeugten Sensorsignale die Bremsdruckdifferenz zwischen dem Bremsdruck an dem Rad mit dem höheren Reibwert und dem Bremsdruck an dem Rad mit dem niedrigeren Reibwert anpasst, **dadurch gekennzeichnet, dass**
f) die Anpassung die Bremsdruckdifferenz durch das elektronische Steuergerät derart erfolgt, dass eine umso größere Bremsdruckdifferenz zugelassen wird, umso größer das durch den Lenkeingriff erzeugte Gegen-Giermoment ist und dass eine umso geringere Bremsdruckdifferenz zugelassen wird, umso geringer das durch den Lenkeingriff erzeugte Gegen-Giermoment ist.

8. Vorrichtung nach Anspruch 7, **gekennzeichnet durch** ein vom Steuergerät derart gesteuertes Hilfslenksystem, dass am Lenkrad ein in Bezug auf das Brems-Giermoment entgegengesetzt wirkendes Giermoment erzeugt wird, durch welches die Differenz zwischen der Ist-Gierrate und der Soll-Gierrate auf Null eingeregelt wird.

## Claims

1. Method for operating a brake device of a vehicle with brake slip regulation (ABS) on roadways with different friction coefficients on different sides, as a result of which a braking yaw moment is imparted to the vehicle during braking, wherein, on at least one axle of the vehicle, an absolute brake pressure difference between the brake pressure at the wheel with the higher friction coefficient and the brake pressure at the wheel with the lower friction coefficient is adapted as a function of a steer input, intended to produce a yaw moment acting counter to the braking yaw moment, by the driver and/or by an automatically intervening auxiliary steering system, **characterized in that** the brake pressure difference permitted is larger, the larger the counter yaw moment produced by the steer input, and **in that** the brake pressure difference permitted is smaller, the smaller the counter yaw moment produced by the steer input.

2. Method according to Claim 1, **characterized in that** the adaptation of the brake pressure difference is carried out exclusively as a function of the steer input by the driver.

3. Method according to either of the preceding claims, **characterized in that** the adaptation of the brake pressure difference is carried out continuously as a function of the steer input.

4. Method according to one of the preceding claims, **characterized in that** it is employed on a front axle brake device.

5. Method according to one of the preceding claims, **characterized in that** the actual yaw rate of the vehicle is adjusted to a setpoint yaw rate as a function of the steer input by modifying the brake pressure difference.

6. Method according to Claim 6, **characterized in that** the setpoint yaw rate is substantially equal to zero.

7. Device for carrying out the method according to one of the preceding claims, comprising
a) at least one brake actuator per wheel of the axle, said brake actuator being controllable electrically, directly or indirectly, and being actuated by pressure medium,
b) at least one brake pressure sensor per brake actuator for the purpose of producing sensor signals dependent on the brake pressure acting in the respective brake actuator,
c) at least one steering angle sensor for producing sensor signals dependent on the steer input,
d) at least one yaw rate sensor for producing sensor signals dependent on the yaw rate of the vehicle or on yaw rates acting on the vehicle,
e) an electronic control unit, which adapts the brake pressure difference between the brake pressure at the wheel with the higher friction coefficient and the brake pressure at the wheel with the lower friction coefficient as a function of the sensor signals produced by the steering angle sensor, the yaw rate sensor and the brake pressure sensors, **characterized in that**
f) the adaption the brake pressure difference by the electronic control unit is carried out in such a way that the brake pressure difference permitted is larger, the larger the counter yaw moment produced by the steer input, and that the brake pressure difference permitted is smaller, the smaller the counter yaw moment produced by the steer input.

8. Device according to Claim 7, **characterized by** an auxiliary steering system controlled by the control unit in such a way that a yaw moment acting counter to the braking yaw moment is produced at the steering wheel, adjusting the difference between the actual yaw rate and the setpoint yaw rate to zero.

## Revendications

1. Procédé pour faire fonctionner un dispositif de freinage d'un véhicule ayant un contrôle de glissement de freinage (ABS) sur des routes à coefficients de frottement différent suivant les côtés, sur la base duquel il est appliqué au freinage un couple de lacet de freinage au véhicule, dans lequel, sur au moins un essieu du véhicule, on adapte une différence absolue de pression de freinage entre la pression de freinage sur la roue ayant le coefficient de frottement le plus grand et la pression de freinage sur la roue ayant le coefficient de friction le plus petit, une intervention de braquage du conducteur et/ou d'un système d'aide à la conduite intervenant automatiquement, en vue de la production d'un couple de lacet agissant en sens contraire de celui du couple de lacet de freinage, **caractérisé en ce que** l'on autorise une différence de pression de freinage d'autant plus grande que le couple de lacet antagonistes produit par l'intervention de braquage est plus grand et **en ce que** l'on autorise une différence de pression de freinage d'autant plus petite que le couple de lacet antagoniste produit par l'intervention de braquage est plus petit.

2. Procédé suivant la revendication 1, **caractérisé en ce que** l'on effectue l'adaptation de la différence de la pression de freinage exclusivement en fonction de l'intervention de braquage du conducteur.

3. Procédé suivant l'une des revendications précédentes, **caractérisé en ce que** l'on effectue, en continu, l'adaptation de la différence de la pression de freinage en fonction de l'intervention de braquage.

4. Procédé suivant l'une des revendications précédentes, **caractérisé en ce qu'**on l'applique à un dispositif de freinage d'un essieu avant.

5. Procédé suivant l'une des revendications précédentes, **caractérisé en ce que** l'on règle, à un taux de lacet de consigne, le taux de lacet réel du véhicule en fonction de l'intervention de braquage par modification de la différence de la pression de freinage.

6. Procédé suivant la revendication 5, **caractérisé en ce que** le taux de lacet de consigne est sensiblement égal à zéro.

7. Système pour exécuter le procédé suivant l'une des revendications précédentes, comportant
a) pour chaque roue de l'essieu, au moins un actionneur de frein pouvant être commandé électriquement directement ou indirectement et actionné au moyen d'une pression,
b) pour chaque actionneur de frein, au moins un capteur de la pression de freinage pour produire des signaux de capteur en fonction de la pression de freinage agissant dans chaque actionneur de frein,
c) au moins un capteur d'angle de braquage pour produire des signaux de capteur en fonction de l'intervention de braquage,
d) au moins un capteur de taux de lacet pour produire des signaux de capteur en fonction du taux de lacet du véhicule ou de couples de lacet agissant sur le véhicule,
e) un appareil électronique de commande, qui, en fonction des signaux de capteur produits par le capteur d'angle de braquage et par le capteur de taux de lacet par les capteurs de la pression de freinage, adapte la différence de la pression de freinage entre la pression de freinage sur la roue ayant le coefficient de friction le plus grand et la pression de freinage sur la roue ayant le coefficient de friction le plus petit, **caractérisé en ce que**
f) adapter la différence de la pression de freinage s'effectue par l'appareil électronique de commande, de manière à ce que l'on autorise une différence de pression de freinage d'autant plus grande que le couple de lacet antagonistes produit par l'intervention de braquage est plus grand et **en ce que** l'on autorise une différence de pression de freinage d'autant plus petite que le couple de lacet antagonistes produit par l'intervention de braquage est plus petit.

8. Système suivant la revendication 7, **caractérisé par** un système d'aide à la conduit commandé par l'appareil de commande, de manière à produire, au volant de direction, un couple de lacet agissant en sens contraire du couple de lacet de freinage, par lequel la différence entre le taux de lacet réel et le taux de lacet de consigne est réglée à zéro.
